# EUROPEAN PATENT APPLICATION

(11) **EP 2 767 910 A1**
(43) Date of publication of application: **20.08.2014**
(21) Application number: 13155839.7
(22) Date of filing: 19.02.2013
(51) Int. Cl.: G06F 17/30, H04L 29/06, H04N 21/262, H04N 21/845

(54) **Device for controlling sychronisation of a set of data contents with a multimedia content, and device for retrieving said data contents for an equipment**

(71) Applicant: ALCATEL LUCENT, 92100 Boulogne-Billancourt (FR)
(72) Inventor: Gaste, Yann, 91620 Nozay (FR); Verdot, Vincent, 91620 Nozay (FR)
(74) Representative: Camus, Olivier Jean-Claude

(57) **Abstract**

A device (D1) is arranged for controlling synchronisation of a set of data contents with an associated multimedia content. This device (D1) comprises a selection means (SM) arranged for collecting these data contents and for organizing them to produce a data content channel and associated channel information, and an encoding means (EM) arranged for dividing this data content channel into data blocks depending on this associated channel information, then for associating indexes respectively to these data blocks, then for producing a file comprising these indexes, these data blocks, and first and second information characterizing respectively this file and these data blocks.

## Description

### Technical field

The present invention relates to provision to communication equipments of data contents to be stored, transferred and displayed with associated multimedia contents.

### Background of the invention

The number of multimedia contents accessed through the Internet keeps on increasing. Thus, every minute several tens of digital pictures and more than one million of videos are streamed or downloaded to be displayed. In addition, more and more of these multimedia contents are socialized, i.e. may be subject to association of data contents, such as annotations (i.e. a comment from a person about one of their elements) or conversations between people about them. Moreover, following social interactions and comments has become a key part of watching multimedia contents, like broadcast television shows or user generated contents, because a lot of persons considers that it provides a more active and powerful experience.

The number of data contents that can be associated to a multimedia content may notably vary during its display. For instance, some announcements or key moments during a television show may induce a peak of several thousands of tweets per second, and some events broadcasted in real time on television channel may induce more than one million of tweets over a social network platform, with 2/3 of them emitted during these events.

Because of the huge number of data contents associated to multimedia contents, the amount of data to be stored and streamed is already equivalent, in size, to the stored digital audio data. For instance, during some important events the high-quality encoding of video (720p), audio (5.1 AC3) and "social" data contents may respectively produce streams with average bitrates of 6 Mbps, 450 Kbps and 650 Kbps. Therefore, media storage and transmission costs may become significant, and existing text and metadata codecs are not tailored and designed to support such physical and network constraints, and notably large amount of data contents with possible huge variations in time that need to be streamed to allow back and forward navigation in a multimedia content. Indeed, existing codecs (or encoding/decoding) provides a placeholder of specific or generic information models as well as minimal structures (hierarchical mode in general), for instance through the use of XML Schema, but do not provide relevant solutions to optimize the synchronization between huge amount of data contents and an associated multimedia content and the transportation means.

### Summary of the invention

So there is a need for a solution allowing encoding, delivering and decoding of data contents associated to multimedia contents and accurately time aligned to allow them to be stored and then soft-treated, played and navigated.

To this effect the invention notably provides a first device, intended for controlling synchronisation of a set of data contents with an associated multimedia content, and comprising:
- a selection means arranged for collecting these data contents (for instance from existing social network platform(s)) and for organizing them to produce a data content channel and associated channel information, and
- an encoding means arranged for dividing this data content channel into data blocks depending on this associated channel information, then for associating indexes respectively to these data blocks, then for producing a file comprising these indexes, these data blocks, and first and second information characterizing respectively this file and these data blocks.

For instance, the selection means of this first device may be arranged for computing an optimal time duration for the data blocks as a function of network and/or application constraints as well as characteristics of a graph associated to the data contents, this optimal time duration constituting channel information.

Also for instance, the selection means of this first device may be arranged for determining an encoding method to be applied by the encoding means for dividing the data content channel into data blocks, this encoding method constituting channel information.

The invention also provides a web server comprising a first device such as the one above introduced.

The invention also provides a first method, intended for controlling synchronisation of a set of data contents with an associated multimedia content, and comprising:
- a first step (i) consisting in collecting these data contents and for organizing them to produce a data content channel and associated channel information, and
- a second step (ii) consisting in dividing this data content channel into data blocks depending on the associated channel information, then for associating indexes respectively to these data blocks, then for producing a file comprising these indexes, these data blocks and first and second information characterizing respectively the file and these data blocks.

The invention also provides a computer program product comprising a set of instructions arranged for performing a first method such as the one above introduced to control synchronisation of a set of data contents with an associated multimedia content.

The invention also provides a second device, intended for retrieving data contents associated to a multimedia content for a communication equipment, and comprising:
- a decoding means arranged for retrieving first information characterizing at least one file associated to a multimedia content requested by the communication equipment and further comprising data blocks representative of data contents associated to this requested multimedia content, indexes associated respectively to these data blocks, and second information characterizing these data blocks, then for downloading the indexes of each file characterized by a retrieved first information, and for downloading on demand at least one data block associated to a downloaded index, and
- a presentation means arranged for analysing the downloaded indexes on demand of the communication equipment and channel information associated to the file to determine each data block to be downloaded at a chosen time, then for providing, on demand and at chosen time, each downloaded data block to the communication equipment so that data contents it comprises could be analysed and displayed by this communication equipment.

For instance, the presentation means of this second device may be arranged for determining a time drift representative of a delay to be applied to a request of a downloaded data block before providing it to the communication equipment.

The invention also provides a communication equipment comprising a media player, a display means and a second device such as the one above introduced.

The invention also provides a second method, intended for retrieving data contents associated to a multimedia content for at least one communication equipment, and comprising:
- a first step (i) consisting in retrieving first information characterizing at least one file associated to a multimedia content requested by a communication equipment and further comprising data blocks representative of data contents associated to this requested multimedia content, indexes associated respectively to these data blocks, and second information characterizing these data blocks, then for downloading these indexes of each file characterized by a retrieved first information, and for downloading on demand at least one data block associated to a downloaded index, and
- a second step (ii) consisting in analysing these downloaded indexes on demand of the communication equipment and channel information associated to the file to determine each data block to be downloaded at a chosen time, then for providing, on demand and at chosen time, each downloaded data block to the communication equipment so that data contents it comprises could be analysed and displayed by the communication equipment.

The invention also provides a computer program product comprising a set of instructions arranged for performing a second method such as the one above introduced to retrieve data contents associated to a multimedia content for at least one communication equipment.

The invention can be notably used in the case where the data contents are either social network information originating from at least one social network and relating to a multimedia content, or picture(s) and/or audio and/or video contents having a relation with another multimedia content.

### Brief description of the figures

Other features and advantages of the invention will become apparent on examining the detailed specifications hereafter and the appended drawings, wherein:
- figure 1 schematically and functionally illustrates a web server and a communication equipment respectively equipped with first and second devices according to the invention and connected to a communication network to which is also connected a social network platform,
- figure 2 schematically illustrates an example of embodiment of a file produced by a first device according to the invention from data contents associated to a multimedia content, and
- figure 3 schematically illustrates an example of sequence diagram intended for providing a communication equipment with chosen data blocks representative of data contents associated to a multimedia content and comprised into a file produced by a first device according to the invention.

### Detailed description of the preferred embodiment

The appended drawings may serve not only to complete the invention, but also to contribute to its understanding, if need be.

The invention aims, notably, at offering a first device D1 intended for controlling synchronisation of a set of data contents with an associated multimedia content, a first corresponding method, an associated second device D2 intended for retrieving data contents synchronized with an associated multimedia content for at least one communication equipment CE, and a second corresponding method.

In the following description it will be considered that the communication equipment CE is a personal computer or a laptop comprising a media player MP and a display means DPM (i.e. a display screen and the associated interface, at least). But the invention is not limited to this type of communication equipment. So, it could be also a server, an electronic tablet, a smart phone, a personal digital assistant, a set-top box, a residential gateway, a game console or a connected television, for instance. More generally it concerns any type of electronic equipment comprising a media player and a communication module, capable of establishing connexion with at least one wired or wireless communication network to exchange data with other communication equipments.

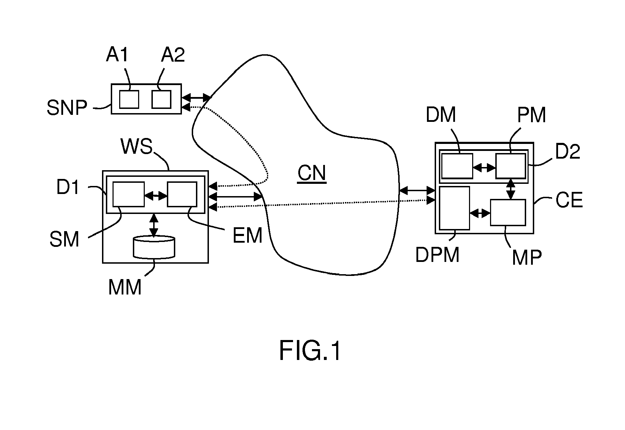

As illustrated in figure 1, to establish communications, notably for downloading or streaming multimedia contents to be displayed, the communication equipment CE must be connected to a communication network CN offering access to at least one server WS comprising a memory means MM capable of storing huge amount of digital data, and notably multimedia contents. For instance, the server WS is a HTTP web server that can be access through the Internet (which is accessible through the communication network CN).

As mentioned above, the invention notably proposes a first device D1 that is intended for controlling synchronisation of a set of data contents with an associated multimedia content.

In the following description it will be considered that the multimedia contents are audio and/or video contents, and that the data contents are social network information originating from at least one social network platform SNP that is accessible through the communication network CN and in which is running at least one application Ak (here k = 1 or 2). For instance, these data contents may be annotations (i.e. a comment from a person about one element of a multimedia content) or conversations between people about a multimedia content. In this non limiting example, the multimedia contents are said "socialized".

But the invention is not limited to these types of multimedia contents and associated data contents. Indeed, data contents could be audio and/or video and/or picture contents having a relation with at least another multimedia content (whatever its type), for instance.

As illustrated in figure 1, a first device D1 comprises at least a selection means SM and an encoding means EM.

In the example illustrated in figure 1 the first device D1 is located into the server WS. But this is not mandatory. Indeed, it may be a communication device that can access to at least one social network platform SNP and to at least one server WS, or it may equip a communication device that can access to at least one social network platform SNP and to at least one server WS. So a first device D1 can be made of software modules, at least partly, or of electronic circuit(s) or hardware modules, or else of a combination of hardware and software modules. In the case where it is made of software modules it can be stored in a memory means or in any computer software product which can be read by an electronic device.

The selection means SM is arranged for collecting data contents (here social network information) associated to a multimedia content, and for organizing these collected data contents to produce a data content channel and associated channel information.

In the non-limiting example illustrated in figure 1, the collection can be carried out near at least one social network platform SNP.

It is important to note that any type of sorting strategy can be used for organizing the collected data contents. The sorting strategy may depend on the needs of the final application of the communication equipment. For instance, it may be a hierarchical sorting strategy, a topic-based sorting strategy or a conservational-based sorting strategy. It is also important to note that any type of format or scripting language (like XML) for representing social data structure can be used as long as it is possible to tie sequential pieces of social network information together.

For instance, the selection means SM can be arranged for computing an optimal time duration for data blocks (or segments) SPj4, that will be produced from the collected data contents by the encoding means EM and that each correspond to a short time interval of playback time of a social network content, as a function of network constraints (such as bandwidth and delay) and/or application constraints as well as characteristics of a graph (i.e. the distribution of tweets over time) that is associated to data contents. This optimal time duration of a data block constitutes a channel information.

Due to intrinsic high variability of the amount of data contents (here social network information) per time segment, the selection means SM can be arranged for determining an encoding method to be applied by the encoding means EM for dividing the data content channel (provided by the selection means SM) into data blocks (or segments) SPj4. Preferably, data blocks (or segments) SPj4 should be split in a way that allows them to be played separately.

Depending on the considered application ("live" real-time or offline content), specific parameters and encoding methods can be applied. For instance, a double-pass encoding process can be proposed to the encoding means EM for offline content. In this case a first pass is intended for analysing the data content channel and for producing file-specific statistics, which will be re-used in a second pass for optimizing the encoding.

The encoding means EM is arranged for dividing the data content channel (provided by the selection means SM) into data blocks (or segments) SPj4 (with j = 1 to N) depending of the associated channel information, then for associating indexes SPj2 respectively to these data blocks SPj4, and then for producing a file F comprising these indexes SPj2, these data blocks SPj4, first information P1 characterizing this file F and second information P3 characterizing these data blocks SPj4.

So, the role of the encoding means EM is to transform the raw physical representation of the data content channel into a data format suitable for storage and transmission (serialization, streaming).

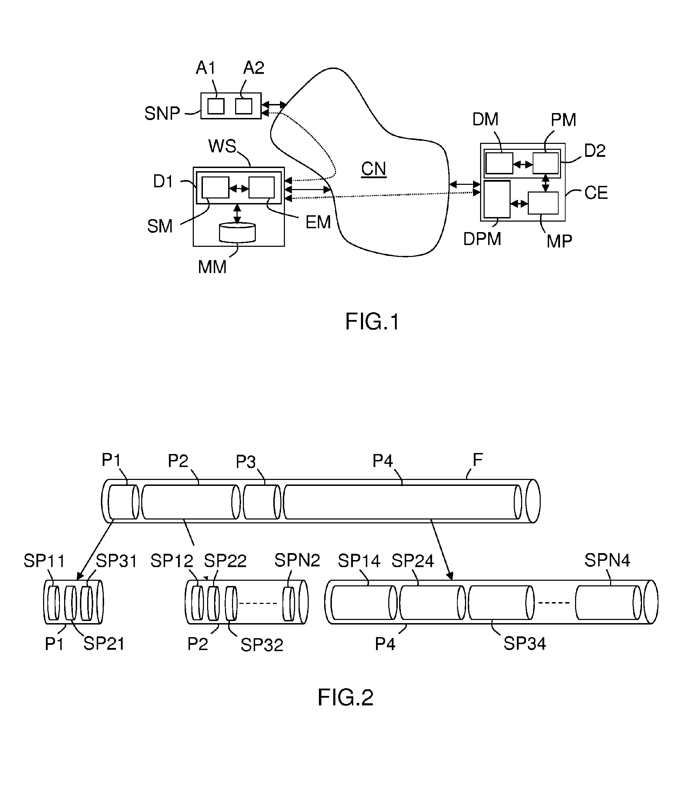

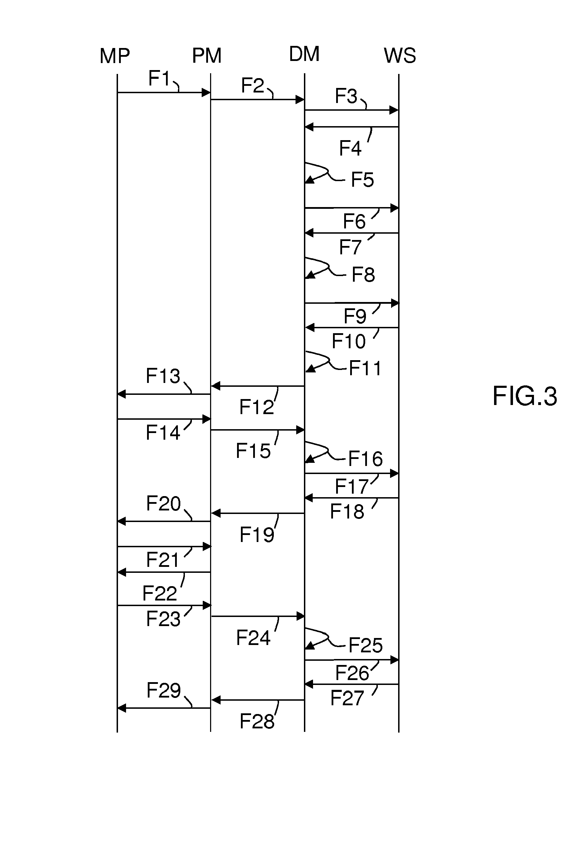

An example of file structure is illustrated in figure 2. In this non-limiting example the file F comprises:
- a first part P1 (or preamble) comprising the first information, and notably the lengths of the fields of the different parts (P1-P4) in a first sub-part SP11, the encoding and compression modes in a second sub-part SP21, and a block time interval and synchronization information in a third sub-part SP31,
- a second part P2 (or index table) comprising the indexes SPj2 associated respectively to the data blocks SPj4 and allowing a random access to these data blocks SPj4,
- a third part P3 (or header) comprising the second information (application-dependant), and
- a fourth part P4 (or payload) comprising the N data blocks SP14 to SPN4 resulting from the division of the data content channel into N segments.

It is important to note that the length of the data blocks SPj4 is preferably constant in a given file F notably to facilitate the quick scanning of the indexes SPj2. Nevertheless, this length could be different for another file F'. But this is not mandatory. Indeed, it could make sense in a given file F to vary the block length over the time when the network constraints are very high and/or the intrinsic variability of the amount of data contents per time segment is high or erratic. In that case, the indexes SPj2 should be augmented with time information related to each data blocks to allow further scanning.

When the encoding phase is complete, i.e. when a file F has been produced by the encoding means EM, the latter (EM) stores it into the memory means MM of a server (here its own web server WS). In this example, the codec (encoding/decoding) is designed to operate over standard web protocols allowing multimedia delivery over HTTP. Use of HTTP allows the reuse of existing HTTP infrastructures, somehow resolving hostility issues, such as NAT ("Network Address Translation") and firewalls.

The invention also proposes a second device D2 that is intended for providing, on demand, data contents synchronized with a requested associated multimedia content to at least one communication equipment CE.

As illustrated in figure 1, a second device D2 comprises at least a decoding means DM and a presentation means PM.

In the example illustrated in figure 1 the second device D2 is located into the communication equipment CE. But this is not mandatory. Indeed, it may be a communication device that can access to at least one server WS and to at least one communication equipment CE, or it may equip a communication device that can access to at least one server WS and to at least one communication equipment CE. So a second device D2 can be made of software modules, at least partly, or of electronic circuit(s) or hardware modules, or else of a combination of hardware and software modules. In the case where it is made of software modules it can be stored in a memory means or in any computer software product which can be read by an electronic device.

The decoding means DM is arranged for retrieving first information characterizing at least one file F that is associated to a multimedia content requested by the communication equipment CE (and more precisely by its media player MP) and that is stored into a server WS (after having been produced by a first device D1).

The requested file F can be designated by an address (for instance a URL) provided explicitly by the media player MP or available via the manifest of the multimedia container that comprises the requested multimedia content.

Once first information has been retrieved, the decoding means DM is further arranged for downloading the indexes SPj2 of each file F characterized by this retrieved first information, and for downloading on demand of the communication equipment CE (and more precisely of its media player MP) at least one data block SPj4 that is associated to a downloaded index SPj2 of this file F.

The indexes (or index table) SPj2 are downloaded in one request thanks to the index length parameter available in the retrieved preamble P1 of the designated file F, and then stored in a memory means of the second device D2 to be further used to determine on demand a relevant data block (or segment) to be downloaded and played.

The presentation means PM is arranged for analysing the indexes SPj2 downloaded by the decoding means DM on demand of the communication equipment CE (and more precisely of its media player MP) and channel information associated to the file F to determine each data block SPj4 to be downloaded at a chosen time (depending on network constraints and data block length), then for providing, on demand and at chosen time, each downloaded data block SPj4 to the communication equipment CE (and more precisely to its media player MP). So, data contents comprised into each downloaded data block SPj4 can be displayed by the display means DPM of the communication equipment CE, under control of the media player MP.

Therefore the presentation module PM is responsible for managing downloads of the available files F and presenting them to a user of a communication equipment CE in an accurate manner (right time and right space).

In the case where a strict synchronization between a multimedia content and associated data contents is required, the presentation means PM can be arranged for determining a time drift that is representative of a delay to be applied to a downloaded data block SPj4 before it is provided to the communication equipment CE (and more precisely to its media player MP).

Relevant "active information" (between segments SPj4) (i.e. the relevant information to be displayed or analysed from a final application point of view) can be also determined by the presentation means PM and transferred on request to the media player MP to be displayed by the display means DPM.

An example of sequence diagram intended for providing a communication equipment CE with chosen data blocks SPj4 (representative of data contents associated to a requested multimedia content) is illustrated in figure 3.

This sequence diagram starts once the media player MP has decided to request data contents associated to a multimedia content requested by the user of its communication equipment CE.

In a step F1 the media player MP may transmit an initiation request, comprising the URL of a file F that is associated to the requested multimedia content, to the presentation means PM of the second device D2.

In a step F2 the presentation means PM may transmit this initiation request to the decoding means DM.

In a step F3 the decoding means DM may transmit a file information request to the web server WS to be registered by it.

In a step F4 the web server WS may transmit a file information response message (that could be a manifest file if the social stream is packed in a file container comprising the multimedia content) to the decoding means DM to confirm that it is now registered.

In a step F5 the decoding means DM extracts all information required for building further server request.

In a step F6 the decoding means DM may transmit a request, requesting first information (or file preamble) characterizing the file F, to the web server WS.

In a step F7 the web server WS may transmit a response message, comprising the requested first information (or file preamble), to the decoding means DM.

In a step F8 the decoding means DM may locally analyze the file preamble to, at least, determine the index table size.

In a step F9 the decoding means DM may transmit a request to the web server WS to request the index table of file F.

In a step F10 the web server WS may transmit a response message, comprising the requested index table of file F, to the decoding means DM.

In a step F11 the decoding means DM may locally analyze the received index table to generate and locally store a final index table.

In a step F12 the decoding means DM may transmit a message to the presentation means PM to indicate that it is ready to provide it with data blocks SPj4.

In a step F13 the presentation means PM may transmit the received message to the media player MP.

In a step F14 the media player MP may transmit an information request to the presentation means PM to request the data content related to the multimedia content segment currently displayed (also called "active data content"). The "active" data in this invention could be seen as a subset of the data block SPj4 that makes sense to be displayed from the final application point of view.

In a step F15 the presentation module PM may transmit a request to the decoding means DM to request next data block SPj4 related to the multimedia content segment timestamp.

In a step F16 the decoding means DM may locally parse the stored final index table to determine each index associated to a newly requested data block SPj4.

In a step F17 the decoding means DM may transmit a request, requesting each determined data block SPj4, to the web server WS.

In a step F18 the web server WS may transmit a response message, comprising each requested data block SPj4, to the decoding means DM.

In a step F19 the decoding means DM may transmit a message, comprising each received data block SPj4, to the presentation means PM.

In a step F20 the presentation means PM may transmit a message, comprising each active data content comprised into the received data block(s) SPj4, to the media player MP.

In a step F21 the media player MP may transmit a new information request to the presentation means PM to request active data content that is comprised into at least one data block SPj4.

Here it is assumed that this last active data content is comprised into the data block(s) SPj4 received in step 19. Therefore, in a step F22 the presentation means PM may transmit a message, comprising each newly requested active data content comprised into the received data block(s) SPj4, to the media player MP.

In a step F23 the media player MP may transmit another information request to the presentation means PM to request at least one active data content that is comprised into at least one data block SPj4 of file F.

Here it is assumed that this other data content is not comprised into the data block(s) SPj4 received in step 19. Therefore, in a step F24 the presentation module PM may transmit a request to the decoding means DM to request each data block SPj4 concerned by each newly requested data content, possibly with a timestamp.

In a step F25 the decoding means DM may locally parse the stored final index table to determine each index associated to a data block SPj4 comprising at least partly a designated data content.

In a step F26 the decoding means DM may transmit a request to the web server WS to request each designated data block SPj4.

In a step F27 the web server WS may transmit a response message, comprising each requested data block SPj4, to the decoding means DM.

In a step F28 the decoding means DM may transmit a message, comprising received data block SPj4, to the presentation means PM.

In a step F29 the presentation means PM may transmit a message, comprising each active data content comprised into the received data block(s) SPj4, to the media player MP.

The invention can also be considered in terms of a first method for controlling synchronisation of a set of data contents with an associated multimedia content.

Such a first method may be implemented by means of a first device D1 such as the one above described. Therefore, only its main characteristics will be mentioned hereafter.

The first method according to the invention comprises:
- a first step (i) consisting in collecting the data contents to synchronize and for organizing them to produce a data content channel and associated channel information, and
- a second step (ii) consisting in dividing this data content channel into data blocks depending on the associated channel information, then for associating indexes respectively to these data blocks, then for producing a file comprising these indexes, these data blocks and first and second information characterizing respectively the file and these data blocks.

The invention can also be considered in terms of a first computer program product comprising a set of instructions that can run in an electronic equipment (for instance the web server WS) for performing the first method described above to control synchronisation of a set of data contents with an associated multimedia content.

The invention can also be considered in terms of a second method for retrieving data contents associated to a multimedia content for at least one communication equipment CE.

Such a second method may be implemented by means of a second device D2 such as the one above described. Therefore, only its main characteristics will be mentioned hereafter.

The second method according to the invention comprises:
- a first step (i) consisting in retrieving first information characterizing at least one file associated to a multimedia content requested by at least one communication equipment CE and further comprising data blocks representative of data contents associated to this requested multimedia content, indexes associated respectively to these data blocks, and second information characterizing these data blocks, then for downloading the indexes of each file characterized by a retrieved first information, and for downloading on demand at least one data block associated to a downloaded index, and
- a second step (ii) consisting in analysing these downloaded indexes on demand of this communication equipment CE and channel information associated to the file to determine each data block to be downloaded at a chosen time, then for providing, on demand and at chosen time, each downloaded data block to this communication equipment CE so that data contents it comprises could be analysed and displayed by this communication equipment CE.

The invention can also be considered in terms of a second computer program product comprising a set of instructions that can run in an electronic equipment (for instance a communication equipment CE) for performing the second method described above to retrieve data contents associated to a multimedia content for at least one communication equipment CE.

The invention allows encoding/decoding of a set of data contents in/from a digital data stream or file, accurately time aligned with a multimedia content to allow playing, navigating and storing. So, it enables a huge content data stream with a highly variable bit rate to be randomly accessed with a generic HTTP web client of a communication equipment.

## Claims

1. Device (D1) for controlling synchronisation of a set of data contents with an associated multimedia content, said device (D1) comprising i) a selection means (SM) arranged for collecting said data contents and for organizing them to produce a data content channel and associated channel information, and ii) an encoding means (EM) arranged for dividing said data content channel into data blocks depending on said associated channel information, then for associating indexes respectively to said data blocks, then for producing a file comprising said indexes, said data blocks and first and second information characterizing respectively said file and said data blocks.

2. Device according to claim 1, wherein said selection means (SM) is arranged for computing an optimal time duration for said data blocks as a function of network and/or application constraints as well as characteristics of a graph associated to said data contents, said optimal time duration constituting channel information.

3. Device according to one of claims 1 and 2, wherein said selection means (SM) is arranged for determining an encoding method to be applied by said encoding means (EM) for dividing said data content channel into data blocks, said encoding method constituting channel information.

4. Device according to one of claims 1 to 3, wherein said data contents are either social network information originating from at least one social network and relating to a multimedia content, or audio and/or video and/or picture contents having a relation with another multimedia content.

5. Web server (WS), wherein it comprises a device (D1) according to one of claims 1 to 4.

6. Method for controlling synchronisation of a set of data contents with an associated multimedia content, said method comprising a first step (i) consisting in collecting these data contents and for organizing them to produce a data content channel and associated channel information, and a second step (ii) consisting in dividing said data content channel into data blocks depending on said associated channel information, then for associating indexes respectively to said data blocks, then for producing a file comprising said indexes, said data blocks and first and second information characterizing respectively said file and said data blocks.

7. Computer program product comprising a set of instructions arranged for performing the method according to claim 6 to control synchronisation of a set of data contents with an associated multimedia content.

8. Device (D2) for retrieving data contents associated to a multimedia content for a communication equipment (CE), said device (D2) comprising i) a decoding means (DM) arranged for retrieving first information characterizing at least one file associated to a multimedia content requested by said communication equipment (CE) and further comprising data blocks representative of data contents associated to said requested multimedia content, indexes associated respectively to said data blocks, and second information characterizing said data blocks, then for downloading said indexes of each file **characterized by** a retrieved first information, and for downloading on demand at least one data block associated to a downloaded index, and ii) a presentation means (PM) arranged for analysing said downloaded indexes on demand of said communication equipment (CE) and channel information associated to said file to determine each data block to be downloaded at a chosen time, then for providing, on demand and at chosen time, each downloaded data block to said communication equipment (CE) so that data contents it comprises could be analysed and displayed by said communication equipment (CE).

9. Device according to claim 8, wherein said presentation means (PM) is arranged for determining a time drift representative of a delay to be applied to a request of a downloaded data block before providing it to said communication equipment (CE).

10. Device according to one of claims 8 and 9, wherein said data contents are either social network information originating from at least one social network and relating to a multimedia content, or audio and/or video contents having a relation with another multimedia content.

11. Communication equipment (CE) comprising a media player (MP) and a display means (DPM), wherein it further comprises a device (D2) according to one of claims 8 to 10.

12. Method for retrieving data contents associated to a multimedia content for at least one communication equipment (CE), said method comprising a first step (i) consisting in retrieving first information characterizing at least one file associated to a multimedia content requested by said communication equipment (CE) and further comprising data blocks representative of data contents associated to said requested multimedia content, indexes associated respectively to said data blocks, and second information characterizing said data blocks, then for downloading said indexes of each file **characterized by** a retrieved first information, and for downloading on demand at least one data block associated to a downloaded index, and a second step (ii) consisting in analysing said downloaded indexes on demand of said communication equipment (CE) and channel information associated to said file to determine each data block to be downloaded at a chosen time, then for providing, on demand and at chosen time, each downloaded data block to said communication equipment (CE) so that data contents it comprises could be analysed and displayed by said communication equipment (CE).

13. Computer program product comprising a set of instructions arranged for performing the method according to claim 12 to retrieve data contents associated to a multimedia content for at least one communication equipment (CE).
